# EUROPÄISCHE PATENTSCHRIFT

(11) **EP 1 995 117 B1**
(45) Veröffentlichungstag und Bekanntmachung des Hinweises auf die Patenterteilung: **18.12.2013**
(21) Anmeldenummer: 07010132.4
(22) Anmeldetag: 22.05.2007
(51) Int. Cl.: B60R 1/06

(54) **Rückblickspiegel für Fahrzeuge, vorzugsweise für Kraftfahrzeuge**
Rear view mirror for vehicles, especially for motor vehicles
Rétroviseur extérieur pour véhicules, de préférence pour véhicules automobiles

(43) Veröffentlichungstag der Anmeldung: 26.11.2008
(73) Patentinhaber: SMR Patents S.à.r.l., 1653 Luxembourg (LU)
(72) Erfinder: Müller, Dirk, 70569 Stuttgart (DE)
(74) Vertreter: Weber-Bruls, Dorothée

(56) Entgegenhaltungen:
- WO-A-01/87667
- DE-A1- 1 455 954
- FR-A- 2 748 709
- GB-A- 1 224 523

## Beschreibung

Die Erfindung betrifft einen Rückblickspiegel für Fahrzeuge, vorzugsweise für Kraftfahrzeuge, nach dem Oberbegriff des Anspruches 1.

Solch ein Rückblickspiegel ist aus der DE 1 455 954 bekannt. Bei dem bekannten Rückblickspiegel liegt das Spiegelglas in einer Nut eines aus geschmeidigem und elastischem Material bestehenden Rahmens, der seinerseits in einem starren Gehäuse sitzt. Es sind auch Aussenrückblickspiegel von Kraftfahrzeugen bekannt, bei denen das Spiegelgehäuse bei einer entsprechenden Belastung in oder entgegen Fahrtrichtung verschwenkt werden kann. Das Spiegelgehäuse mit Spiegelglas und Verstellantrieb und möglicher weiterer Einbauteile ist hierzu schwenkbar an einem Spiegelfuss gelagert, mit dem der Aussenrückblickspiegel am Kraftfahrzeug befestigt wird. Insbesondere bei Aussenrückblickspiegeln, bei denen das Spiegelgehäuse um eine schräge Achse gegenüber dem Spiegelfuss verschwenkbar ist, muss das Spiegelgehäuse gegenüber dem Spiegelglasträger bzw. dem Spiegelglas seine Lage verändern können, ohne dass das Spiegelgehäuse durch diese Teile in seiner Bewegung blockiert wird.

Der Erfindung liegt die Aufgabe zugrunde, den gattungsgemässen Rückblickspiegel so auszubilden, dass das Spiegelgehäuse bei einer entsprechenden Kraftbeaufschlagung zuverlässig relativ zu seinen Einbauteilen bewegt werden kann.

Diese Aufgabe wird beim gattungsgemässen Rückblickspiegel erfindungsgemäss mit den kennzeichnenden Merkmalen des Anspruches 1 gelöst.

Beim erfindungsgemässen Rückblickspiegel ist wenigstens ein Teil des Randbereiches gegenüber dem Spiegelgehäuse bewegbar ausgebildet.

Kommt das Spiegelgehäuse bei seiner Ausweichbewegung mit seinen Einbauelementen, insbesondere dem Spiegelglasträger bzw. dem Spiegelglas, in Berührung, dann erfolgt diese Berührung im Randbereich. Da wenigstens ein Teil dieses Randbereiches gegenüber dem Spiegelgehäuse bewegbar ausgebildet ist, kann der in Kontakt kommende Teil des Randbereiches nachgeben, so dass das Spiegelgehäuse die Ausweichbewegung einwandfrei ausführen kann.

Dieser Teil des Randbereiches kann beispielsweise elastisch nachgiebig ausgebildet sein, so dass dieser Teil bei einer eventuellen Kollision beispielsweise mit dem Spiegelglas oder dem Spiegelglasträger ausweichen kann.

Ebenso ist es möglich, diesen Teil des Randbereiches so auszubilden, dass er bei einer Kollision mit dem Spiegelglas oder dem Spiegelglasträger abbricht. Dies kann durch das Vorsehen von wenigstens einer Sollbruchstelle erleichtert werden.

Ebenso ist es möglich, diesen Teil des Randbereiches so zu gestalten, dass er bei einer Kollision vom Spiegelgehäuse gelöst wird, beispielsweise indem ein verklipster Teil des Randbereiches vom Spiegelgehäuse gelöst wird.

Sofern der Teil des Randbereiches vollständig vom Spiegelgehäuse gelöst wird, kann dieser Teil durch geeignete Fangmittel gesichert werden, so dass die sich vom Spiegelgehäuse lösenden Teile nicht zu einer Gefährdung führen.

Um eine Nachgiebigkeit des Teiles des Randbereiches zu erreichen, kann dieser Teil beispielsweise durch Einbringen eines Filmgelenks schwenkbar am Spiegelgehäuse gelagert sein. Dabei kann dieser Teil bei Druckbeaufschlagen wegklappen, so dass die Ausweichbewegung des Spiegelgehäuses nicht beeinträchtigt wird.

Es ist auch möglich, den Teil des Randbereiches selbst elastisch nachgiebig auszubilden, ihn beispielsweise aus einem entsprechenden elastomeren Material herzustellen. Dann kann dieser Teil des Randbereiches bei einer Kollision elastisch nachgeben.

Es ist auch möglich, den Teil des Randbereiches über eine elastomere Zwischenschicht mit dem Spiegelgehäuse zu verbinden, so dass der Teil über die elastomere Zwischenschicht gegenüber dem Spiegelgehäuse bei einer Kollision wegbiegen kann. Ist die Belastung beendet, kehrt dieser Teil des Randbereiches wieder in seine Ausgangslage zurück. Dies hat den Vorteil, dass das Spiegelgehäuse durch die Kollision nicht beschädigt wird.

Der bewegbare Teil des Randbereiches kann ein Zusatzteil sein, das lackiert, unlackiert, genarbt oder dergleichen ausgebildet ist. Er kann aus Kunststoff oder Metall, einer Weichteilkomponente, zum Beispiel Gummi, oder aus einem 2K-Teil, zum Beispiel einem angespritzten Gummibereich, bestehen. Das Spiegelgehäuse selbst kann zum Beispiel auf einen Träger oder eine Grundplatte aufgesteckt, dort geführt, geklipst, verrastet oder verriegelt werden. Das Spiegelgehäuse selbst kann einteilig oder mehrteilig ausgebildet sein. Der Randbereich kann als Rahmen ausgebildet sein, an den eine Spiegelschale als Aussenhaut angeschlossen ist.

Der gesamte Randbereich kann elastisch nachgiebig ausgebildet sein, so dass gewährleistet ist, dass das Spiegelgehäuse stets seine Ausweichbewegung ausführen kann unabhängig davon, in welchem Teil des Randbereichs die Kollision mit dem Spiegelglas bzw. dem Spiegelglasträger erfolgt.

Der erfindungsgemässe Rückblickspiegel ist vorteilhaft für Ausführungsformen geeignet, bei denen die Schwenkachse des Spiegelgehäuses schräg ausgerichtet ist. Dadurch treten bei einer Schlagbeanspruchung zusätzliche horizontale bzw. orthogonal zur schrägen Schwenkachse verlaufende Kraftkomponenten auf. Solche Rückblickspiegel mit schrägen Schwenkachsen erfüllen die gesetzlichen Anforderungen hinsichtlich der Pendelschlagprüfung einwandfrei. Aufgrund der erfindungsgemässen Ausbildung kann das Spiegelgehäuse gegenüber der Spiegelträgerplatte seine Lage verändern bzw. nach oben ausweichen. Bei einer Kollision kann der bewegbare Teil des Randbereiches ausklipsen, ausweichen, abbrechen und dergleichen, wodurch ein zusätzlicher Verstellweg für das Spiegelgehäuse gegeben ist.

Insbesondere bei grösseren Kraftfahrzeugen, wie Geländewagen, Kleintransporter oder Kleinbusse, nimmt die Grösse der Aussenrückblickspiegel ständig zu. Dies hat zur Folge, dass immer grössere Spiegelflächen in den Spiegelgehäusen untergebracht werden müssen. Ein Verschwenken zum Einstellen des Spiegelglases erfordert einen grösseren Überstand des Randbereichs des Spiegelgehäuses, damit das Spiegelglas nicht aus dem Spiegelgehäuse vorsteht. Der dadurch entstehende grosse Überstand des Spiegelgehäuses gegenüber dem Spiegelglas führt dazu, dass ein mit dem Rückblickspiegel kollidierender Körper zwischen dem Spiegelglas und dem Randbereich des Spiegelgehäuses verhaken kann, was ein einwandfreies Schwenken des Spiegelgehäuses verhindert.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1 :: eine Ansicht auf die Spiegelglasseite eines erfindungsgemässen Rückblickspiegels mit bewegbaren Teilen des Randbereichs,
- Fig. 2 :: teilweise in Draufsicht und teilweise im Horizontalschnitt den Rückblickspiegel gemäss Fig. 1,
- Fig. 3 :: einen Vertikalschnitt durch den Rückblickspiegel mit einem über eine Sollbruchstelle herauslösbaren Teil des Randbereichs des Spiegelgehäuses,
- Fig. 4 :: einen Teilschnitt mit einem bewegbaren, elastischen Teil des Randbereichs des Spiegelgehäuses,
- Fig. 5 :: einen Teilabschnitt mit einem über eine elastische Verbindung bewegbaren Teil des Randbereichs des Spiegelgehäuses,
- Fig. 6 :: einen herauslösbaren Teil des Randbereichs des Spiegelgehäuses, der über einen Flansch mit dem Spiegelgehäuse verbunden ist.

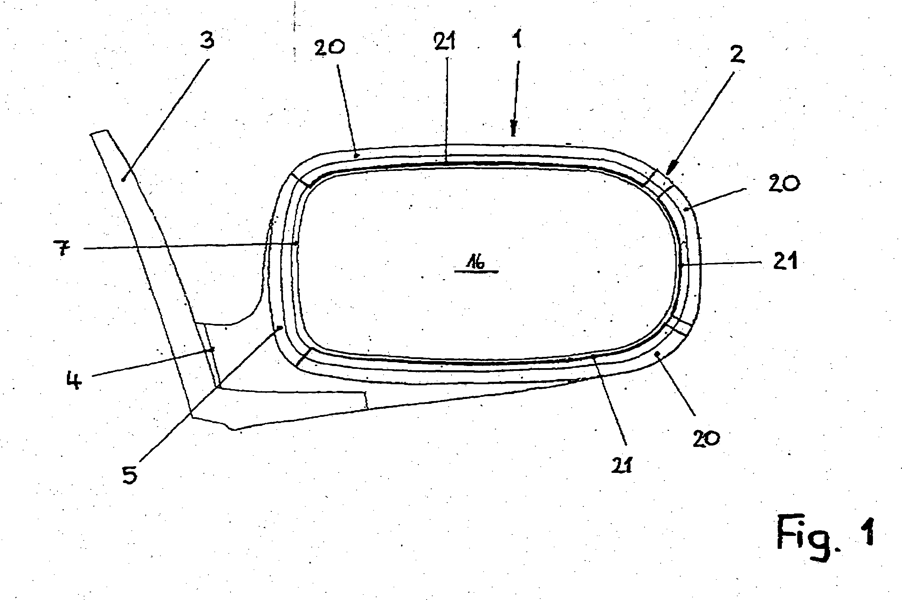

Fig. 1 ist eine Ansicht auf ein Spiegelglas 16 eines Aussenrückblickspiegels 1 eines Kraftfahrzeuges mit bewegbaren Teilen des Randbereichs 5 des Spiegelgehäuses 2, Der Rückblickspiegel 1 hat einen an der Karosserie des Fahrzeuges zu befestigenden Spiegelfuss 3, an dem das in und entgegen Fahrtrichtung 10 schwenkbare Spiegelgehäuse 2 gelagert ist. Zwischen dem Spiegelfuss 3 und dem Spiegelgehäuse 2 ist eine Trennfuge 4 vorgesehen, die den nötigen Freiraum für ein einwandfreies und ungehindertes Schwenken des Spiegelgehäuses 2 ermöglicht.

Das Spiegelgehäuse 2 hat eine Öffnung, die im Wesentlichen durch das Spiegelglas 16 verschlossen wird. Zwischen dem Spiegelglas 16 und der Innenseite des Randbereiches 5 des Spiegelgehäuses 2 ist ein schmaler umlaufender Spalt 7 vorgesehen, der es ermöglicht, dass das Spiegelglas 16 ungehindert in vertikaler und in horizontaler Richtung verschwenkt werden kann.

Im oberen, im unteren und im karosseriefernen Teil des Randbereiches 5 sind bewegbare bzw. herauslösbare Teilbereiche 20 vorgesehen. Sie werden zum Spiegelgehäuse 2 hin durch eine Trennlinie 21 begrenzt. Im Falle einer Belastung des Rückblickspiegels 1 können die auf das Spiegelgehäuse 2 bzw. auf das Spiegelglas 16 wirkenden Kräfte eine Relativbewegung zwischen dem Spiegelglas 16 und dem Spiegelgehäuse 2 verursachen. Ist die auf das Spiegelglas 16 wirkende Belastung zu hoch, kann der umlaufende Spalt 7 zwischen dem Randbereich 5 und dem Spiegelglas 16 überbrückt werden und das Spiegelglas 16 mit dem Randbereich 5 in Berührung kommen. Das Spiegelglas 16 kann in einem solchen Fall am Randbereich 5 verhaken. In diesem Falle besteht die Gefahr, dass der den Rückblickspiegel beaufschlagende Körper im Bereich zwischen dem Spiegelglas 16 und dem Randbereich 5 eingeklemmt werden kann. Ist der kollidierende Körper ein Teil eines menschlichen Körpers, können erhebliche Verletzungen entstehen. Um ein solches Verhaken zwischen dem Spiegelglas 16 und dem Randbereich 5 zu verhindern, ist wenigstens ein Teil des Randbereiches 5 in der Lage, bei Beaufschlagung durch das Spiegelglas 16 oder durch den kollidierenden Körper eine entsprechende Ausweichbewegung durchzuführen. Hierbei ist es möglich, dass dieser Teil des Randbereiches 5 vollständig vom Spiegelgehäuse 2 gelöst wird oder sich so bewegen kann, dass die beschriebene Verhakung zwischen dem Spiegelglas 16 und dem Randbereich 5 verhindert wird.

Der Randbereich 5 kann einstückig aus dem Spiegelgehäuse 2 herausgeformt sein. Es ist auch möglich, den Randbereich 5 durch einen separaten, angesetzten Spiegelrahmen zu bilden.

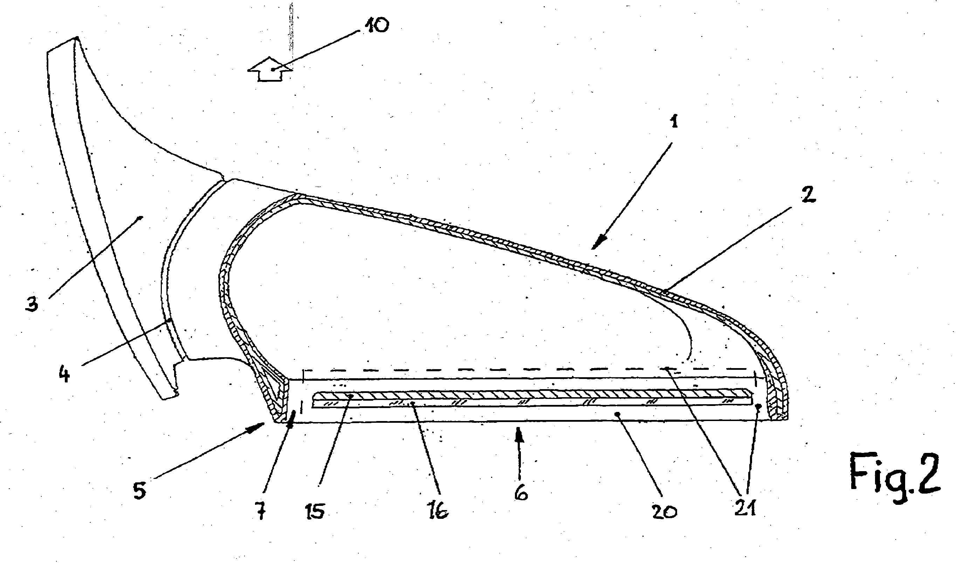

Der bewegbare Teil des Randbereiches 5 ist in Fig. 2 durch eine gestrichelte Trennlinie 21 angedeutet. Längs dieser Trennlinie 21 kann ein Teil 20 des Randbereiches aus dem Spiegelgehäuse 2 herausgelöst werden. Es ist aber auch eine relative Beweglichkeit zwischen dem Teil 20 des Randbereiches 5 und dem Spiegelgehäuse 2 längs der Trennlinie 21 möglich. Die herauslösbaren bzw. bewegbaren Teilbereiche 20 des Randbereiches 5 sind so gestaltet, dass ein Verhaken zwischen dem Spiegelglas 16 und diesen Teilbereichen 20 verhindert wird.

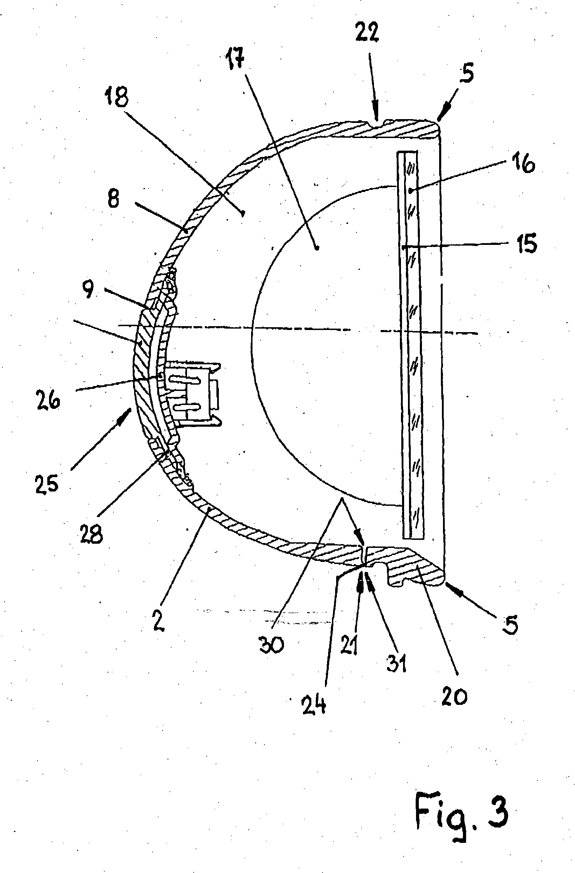

Wie Fig. 3 zeigt, sitzt das Spiegelglas 16 auf einem Spiegelglasträger 15, der mittels eines Verstellantriebes 17 in bekannter Weise verstellt werden kann. Das Spiegelgehäuse 2 hat eine in Fahrtrichtung 10 nach vorn weisende Rückwand 8, die im Querschnitt konkav gekrümmt ist. Das Spiegelgehäuse kann geschlossen sein oder eine Öffnung 9 aufweisen, in die eine Wiederholblinkleuchte 25 eingesetzt werden kann. Sie hat eine Lichtscheibe 26, die mit einem in der Dicke verringerten Rand 28 an der Innenseite der Rückwand 8 befestigt ist. Die Lichtscheibe 26 liegt mit ihrer Aussenseite vorteilhaft bündig mit der Aussenseite der Rückwand 8. Die Lichtscheibe 26 ist Teil eines Leuchtengehäuses 27, das innerhalb des Innenraumes 18 des Spiegelgehäuses 2 liegt.

Das Spiegelgehäuse 2 ist an seiner Oberseite nahe dem Randbereich 5 mit einer Wasserablaufrinne 22 versehen. In Fig. 3 ist gegenüberliegend ein Teilbereich 20 des Randbereiches 5 dargestellt, der über eine Sollbruchstelle 31 mit dem restlichen Teil des Spiegelgehäuses 2 verbunden ist. Die Sollbruchstelle 31 verläuft längs der Trennlinie 21 und ist an der Innenseite des Spiegelgehäuses 2 vorgesehen, so dass sie von aussen nicht sichtbar ist. Die Sollbruchstelle 31 wird dadurch gebildet, dass der Teilbereich 20 über einen dünnen Steg 24 mit dem Spiegelgehäuse 2 verbunden ist. Im Bereich des Steges 24 ist zwischen dem Teilbereich 20 und dem Spiegelgehäuse 2 ein Spalt 30 vorgesehen.

Werden das Spiegelglas 16 und das Spiegelgehäuse 2 bei entsprechender Belastung auf den Rückblickspiegel relativ zueinander verschoben und kommt das Spiegelglas 16 bzw. der Spiegelglasträger 15 mit dem Teilbereich 20 in Kontakt, dann kann der Teilbereich 20 bei entsprechend hoher Belastung an der Sollbruchstelle 31 abbrechen. Der dünne Steg 24 erleichtert das Abbrechen. Über die Dicke des Steges 24 lässt sich einfach einstellen, bei welcher Belastung der Bruch erfolgt.

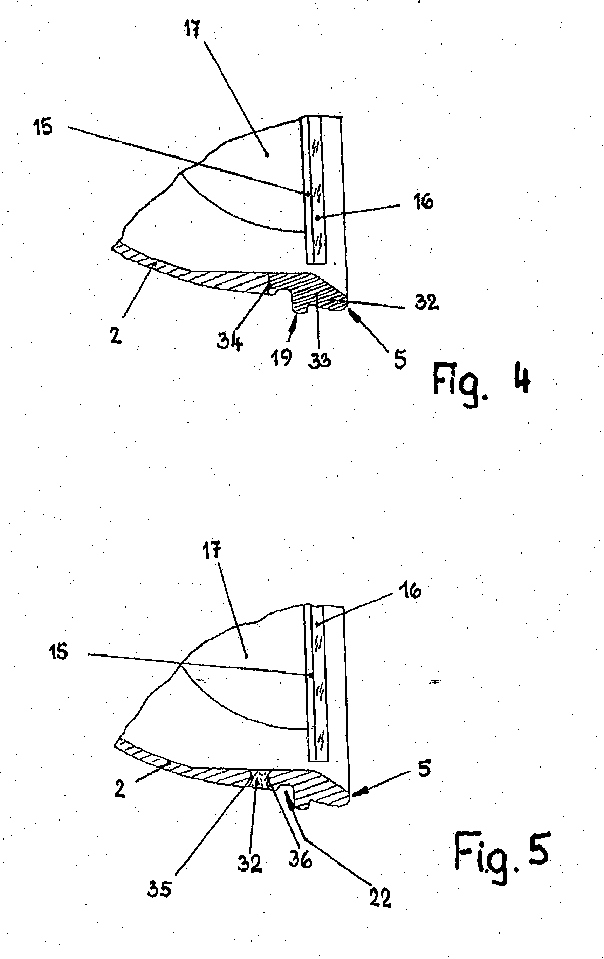

Beim Ausführungsbeispiel nach Fig. 4 ist der Randbereich 5 durch einen umlaufenden elastischen Rahmen 33 gebildet, der an das Spiegelgehäuse 2 über einen Kontaktbereich 34 angeschlossen ist. Der Rahmen 33 besteht vorteilhaft aus einem Elastomer und wird beispielsweise mittels eines Zweikomponentenspritzverfahrens an das ebenfalls aus Kunststoff bestehende Spiegelgehäuse 2 angespritzt. Der Rahmen 33 ist in seiner Formgebung so ausgebildet, dass er das äussere Erscheinungsbild des Spiegelgehäuses nicht verändert. So kann der Rahmen 33 beispielsweise eine Wasserabtropfkante 19 aufweisen, wie sie beispielhaft bei der Ausführungsform nach Fig. 4 vorgesehen ist. Der Rahmen 33 ist elastisch beweglich, so dass er bei einem Kontakt mit dem Spiegelglas 16 und/oder dem Spiegelglasträger 15 nachgeben kann. Anschliessend gelangt der elastische verformte Teil wieder in seine Ausgangslage zurück.

Der Randbereich 5 kann vollständig durch einen umlaufenden Rahmen 33 gebildet sein, der an das Spiegelgehäuse 2 angespritzt wird, Es ist aber selbstverständlich auch möglich, nur einzelne Randbereiche aus dem elastischen Material 32 herzustellen.

Bei der Ausführungsform nach Fig. 5 ist der Randbereich 5 mittels einer elastomeren Zwischenschicht 32 an das Spiegelgehäuse 2 angebunden. Entsprechend der vorigen Ausführungsform kann dieser Randbereich 5 als umlaufender Rahmen ausgebildet sein, der über die elastomere Zwischenschicht 32 an das Spiegelgehäuse 2 angebunden ist. Wie bei der vorigen Ausführungsform können auch nur ein oder mehrere Teilbereiche des Randbereiches 5 über diese elastomere Zwischenschicht 32 mit dem Spiegelgehäuse 2 verbunden sein. Die einander zugewandten Ränder 35, 36 des Spiegelgehäuses 2 und des Randbereiches 5 sind jeweils im Querschnitt konvex gekrümmt. Dadurch wird eine zuverlässige Verbindung des Randbereiches 5 über die Zwischenschicht 32 mit dem Spiegelgehäuse 2 erreicht. Schlagen bei einer entsprechenden äusseren Belastung das Spiegelglas 16 und/oder der Spiegelglasträger 15 gegen den Randbereich 5, so kann dieser infolge der elastischen Zwischenschicht 32 gegenüber dem Spiegelgehäuse 2 wegschwenken. Dadurch kann der Randbereich 5 selbst aus hartem Kunststoff bestehen und muss nicht selbst aus elastisch nachgiebigem Material bestehen. An der Aussenseite des Randbereiches 5 ist beispielhaft die Wasserablaufrinne 22 vorgesehen, die auch bei der Ausführungsform nach Fig. 4 vorgesehen sein kann. Die Zwischenschicht 32 hat eine solche Dicke, dass sie im Übergangsbereich zwischen dem Spiegelgehäuse 2 und dem Randbereich 5 einen stetigen Übergang bildet. Dadurch sind sowohl die Innen- als auch die Aussenseite des Spiegelgehäuses im Bereich der Zwischenschicht 32 nicht mit einem Absatz versehen, sondern die Innen- und die Aussenseite der Zwischenschicht 32 bildet eine stetige Fortsetzung der Innen- bzw. Aussenseite des Spiegelgehäuses 2 und des Randbereiches 5.

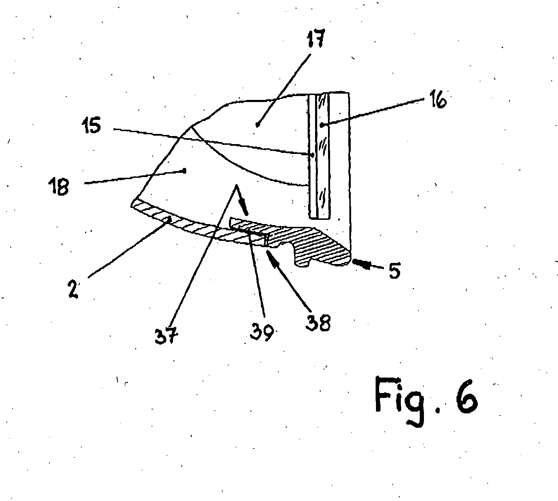

Beim Ausführungsbeispiel nach Fig. 6 ist der Randbereich 5 so ausgebildet, dass er bei entsprechender Belastung vom Spiegelgehäuse 2 abgelöst werden kann. Wie schon bei den vorigen Ausführungsformen kann der Randbereich 5 über den gesamten Umfang in der noch zu beschreibenden Weise ausgebildet sein. Es ist aber auch möglich, am Randbereich 5 nur einen oder mehrere Teilbereiche vorzusehen, die bei entsprechender Belastung vom Spiegelgehäuse 2 gelöst werden können. Der Randbereich 5 hat einen schmalen Flansch 37, mit dem er an der Innenseite des Spiegelgehäuses 2 anliegt und mit ihm verbunden, beispielsweise verklebt oder verschweisst ist. Die Klebeschicht 39 ist vorteilhaft nur zwischen dem Flansch 37 und der Innenseite des Spiegelgehäuses 2 vorgesehen. Im Anschluss an den Flansch 37 liegt der Randbereich 5 unter Bildung einer schmalen Trennfuge 38 der freien Stirnseite des Spiegelgehäuses 2 gegenüber. Der Randbereich 5 kann aber auch an der Stirnseite des Spiegelgehäuses 2 anliegen. Wie bei den vorigen Ausführungsformen befindet sich die Trennstelle zum Spiegelgehäuse 2 mit Abstand zum Spiegelglas 16. Dadurch kommt bei entsprechender Belastung das Spiegelglas 16 bzw. der Spiegelglasträger 15 mit Abstand von der Anschlussstelle zum Spiegelgehäuse 2 mit dem Randbereich 5 in Berührung. Bei entsprechend hoher Belastung wird der Randbereich oder der entsprechende Teilbereich vom Spiegelgehäuse 2 gelöst, indem der Flansch 37 von der Innenseite des Spiegelgehäuses 2 abgelöst wird. Der für die Klebeschicht 39 eingesetzte Kleber wird so ausgewählt, dass er einerseits eine ausreichend feste Verbindung des Randbereiches 5 am Spiegelgehäuse 2 gewährleistet, andererseits jedoch ein Ablösen des Flansches 37 vom Spiegelgehäuse 2 ermöglicht. Da das Spiegelglas 16 bzw. der Spiegelglasträger 15 mit Abstand vom Anschlussbereich zum Spiegelgehäuse 2 mit dem Randbereich 5 in Berührung kommen, wird ein entsprechender Hebelarm gebildet, der das Ablösen bzw. Wegschwenken des Randbereiches 5 erleichtert.

Da bei der Ausführungsform nach Fig. 6 der Randbereich beim Ablösen vom Spiegelgehäuse 2 nicht beschädigt oder zerstört wird, ist es möglich, ihn wieder am Spiegelgehäuse 2 anzubringen.

## Patentansprüche

1. Rückblickspiegel (1) für Fahrzeuge, vorzugsweise für Kraftfahrzeuge, mit einem Spiegelgehäuse (2), in dem ein Spiegelglas (16) untergebracht ist und das das Spiegelglas (16) mit einem Randbereich (5) umgibt, **dadurch gekennzeichnet, dass** das Spiegelglas (16) auf einem Spiegelglasträger (15) sitzt, der mittels eines Verstellantriebs (17) verstellt werden kann, und wenigstens ein Teil (20) des Randbereiches (5) gegenüber dem Spiegelgehäuse (2) bewegbar ausgebildet ist.

2. Rückblickspiegel nach Anspruch 1, **dadurch gekennzeichnet, dass** der bewegbar ausgebildete Teil (20) des Randbereiches (5) aus einem Elastomer (32) besteht.

3. Rückblickspiegel nach Anspruch 1, **dadurch gekennzeichnet, dass** der bewegbar ausgebildete Teil (20) des Randbereiches (5) über eine elastomere Zwischenschicht (32) mit dem Spiegelgehäuse (2) verbunden ist.

4. Rückblickspiegel nach Anspruch 1, **dadurch gekennzeichnet, dass** der bewegbar ausgebildete Teil (20) des Randbereiches (5) filmgelenkartig mit dem Spiegelgehäuse (2) verbunden ist.

5. Rückblickspiegel nach einem der Ansprüche 1 bis 4, **dadurch gekennzeichnet, dass** der bewegbar ausgebildete Teil (20) des Randbereiches (5) nach Auslenkung in seine Ausgangslage zurückfedert.

6. Rückblickspiegel nach Anspruch 1, **dadurch gekennzeichnet, dass** der Teil (20) des Randbereiches (5) vom Spiegelgehäuse (2) lösbar ist.

7. Rückblickspiegel nach Anspruch 6, **dadurch gekennzeichnet, dass** der lösbare Teil (20) des Randbereiches (5) über wenigstens eine Sollbruchstelle (30) mit dem Spiegelgehäuse (2) verbunden ist.

8. Rückblickspiegel nach Anspruch 7, **dadurch gekennzeichnet, dass** der herauslösbare Teil (20) des Randbereiches (5) über wenigstens einen dünnen Steg (24) mit dem Spiegelgehäuse (2) verbunden ist.

9. Rückblickspiegel nach Anspruch 6, **dadurch gekennzeichnet, dass** der lösbare Teil (20) des Randbereiches (5) über einen Flansch (37) mit dem Spiegelgehäuse (2) verbunden ist.

10. Rückblickspiegel nach Anspruch 9, **dadurch gekennzeichnet, dass** zwischen dem Flansch (37) und dem Spiegelgehäuse (2) wenigstens eine Klebe- oder Schweissschicht (39) vorgesehen ist.

## Claims

1. Rear view mirror (1) for vehicles, preferably for motor vehicles, with a mirror housing (2), in which a mirror glass (16) is accommodated and which surrounds, with an edge region (5), the mirror glass (16), **characterized in that** the mirror glass (16) sits on a mirror glass support (15) that can be adjusted by means of an adjusting drive (17), and at least a part (20) of the edge region (5) is designed such that it is movable with respect to the mirror housing (2).

2. Rear view mirror according to claim 1, **characterized in that** the movable part (20) of the edge region (5) consists of an elastomer (32).

3. Rear view mirror according to claim 1, **characterized in that** the movable part (20) of the edge region (5) is connected to the mirror housing (2) via an elastomeric intermediate layer (32).

4. Rear view mirror according to claim 1, **characterized in that** the movable part (20) of the edge region (5) is connected to the mirror housing (2) by means of a film hinge.

5. Rear view mirror according to any one of claims 1 to 4, **characterized in that** the movable part (20) of the edge region (5) springs back to its original position after being deflected.

6. Rear view mirror according to claim 1, **characterized in that** the part (20) of the edge region (5) can be detached from the mirror housing (2).

7. Rear view mirror according to claim 6, **characterized in that** the detachable part (20) of the edge region (5) is connected to the mirror housing (2) via at least one predetermined breaking point (30).

8. Rear view mirror according to claim 7, **characterized in that** the detachable part (20) of the edge region (5) is connected to the mirror housing (2) via at least one thin web (24).

9. Rear view mirror according to claim 6, **characterized in that** the detachable part (20) of the edge region (5) is connected to the mirror housing (2) via a flange (37).

10. Rear view mirror according to claim 9, **characterized in that** at least one adhesive layer or weld layer (39) is provided between the flange (37) and the mirror housing (2).

## Revendications

1. Rétroviseur (1) pour véhicules, de préférence pour des automobiles, ayant un boîtier de rétroviseur (2) dans lequel est agencé un miroir de rétroviseur (16), et qui entoure le miroir de rétroviseur (16) avec une zone de bordure (5), **caractérisé en ce que** le miroir de rétroviseur (16) est posé sur un support de miroir de rétroviseur (15), qui va pouvoir être réglé à l'aide d'une commande de réglage, et au moins une partie (20) de la zone de bordure (5) est réalisée mobile vis-à-vis du boîtier de rétroviseur (2).

2. Rétroviseur selon la revendication 1, **caractérisé en ce que** la partie réalisée mobile (20) de la zone de bordure (5) est constituée d'un élastomère(32).

3. Rétroviseur selon la revendication 1, **caractérisé en ce que** la partie réalisée mobile (20) de la zone de bordure (5) est reliée au boîtier de rétroviseur (2) au moyen d'une couche intermédiaire en élastomère (32).

4. Rétroviseur selon la revendication 1, **caractérisé en ce que** la partie réalisée mobile (20) de la zone de bordure (5) est reliée au boîtier de rétroviseur (2) au moyen d'un film-charnière.

5. Rétroviseur selon l'une quelconque des revendications 1 à 4, **caractérisé en ce que** la partie réalisée mobile (20) de la zone de bordure (5) revient dans sa position initiale après un déplacement.

6. Rétroviseur selon la revendication 1, **caractérisé en ce que** la partie réalisée mobile (20) de la zone de bordure (5) est amovible par rapport au boîtier de rétroviseur (2).

7. Rétroviseur selon la revendication 6, **caractérisé en ce que** la partie réalisée mobile (20) de la zone de bordure (5) est reliée au boîtier de rétroviseur (2) au moyen d'au moins un point de rupture (30).

8. Rétroviseur selon la revendication 7, **caractérisé en ce que** la partie réalisée mobile (20) de la zone de bordure (5) est reliée au boîtier de rétroviseur (2) au moyen d'au moins une fine traverse (24).

9. Rétroviseur selon la revendication 6, **caractérisé en ce que** la partie réalisée mobile (20) de la zone de bordure (5) est reliée au boîtier de rétroviseur (2) au moyen d'un rebord (37).

10. Rétroviseur selon la revendication 9, **caractérisé en ce qu'**une couche adhésive ou de soudure (39) est prévue entre le rebord (37) et le boîtier de rétroviseur (2).
